# EUROPEAN PATENT SPECIFICATION

(11) **EP 3 345 793 B1**
(45) Date of publication and mention of the grant of the patent: **04.09.2019**
(21) Application number: 18154335.6
(22) Date of filing: 28.05.2015
(51) Int. Cl.: B60R 21/00, G08B 21/00, G08G 1/13, B60Q 1/52, B60R 21/0132

(54) **AUTOMATIC ALERTING DEVICE AND AUTOMATIC ALERTING METHOD**
VORRICHTUNG ZUR AUTOMATISCHEN ALARMIERUNG UND VERFAHREN ZUR AUTOMATISCHEN ALARMIERUNG
DISPOSITIF D'ALERTE AUTOMATIQUE ET PROCÉDÉ D'ALERTE AUTOMATIQUE

(30) Priority: 24.06.2014 JP 2014129220
(43) Date of publication of application: 11.07.2018
(62) Divisional of application: 15812251.5
(73) Proprietor: ROBERT BOSCH GMBH, 70469 Stuttgart (DE)
(72) Inventor: OBUCHI, Hisashi, Yokohama-shi, Kanagawa 224-8501 (JP)

(56) References cited:
- WO-A2-2007/044744
- DE-A1-102012 107 186
- US-A1- 2005 275 522

## Description

### Technical Field

The invention relates to an automatic alerting device and an automatic alerting method that automatically alert outside to occurrence of a vehicle accident.

### Background Art

In recent years, many riders enjoy riding off-road motorcycles in a rugged mountain terrain. The rugged mountain terrain is particularly deserted and is often out of service coverage of cellular phones and the like. In the case where the rider is involved in an accident while riding on the motorcycle alone, the rider cannot request rescue through the cellular phone to the outside. In addition, because the rugged mountain terrain is deserted, the injured rider can do nothing but wait until another rider accidentally passes by a site of the accident.

A device that detects occurrence of an accident and automatically sends a message requesting rescue to the outside at a time when the accident, such as falling of a vehicle like a two-wheeled vehicle, occurs has been known (see PTL 1).

### Citation List

### Patent Literature

[PTL 1] WO 2012/085324.

WO 2007/044744 A2 discloses an automatic alerting device that automatically alerts about occurrence of an accident of a vehicle, the automatic alerting device comprising: a wheel speed sensor that detects the wheel speed of the vehicle; a lateral G sensor that detects lateral G of the vehicle; and an accident determination section that determines whether the vehicle is involved in the accident on the basis of the wheel speed detected by the wheel speed sensor, an absolute value of the lateral G of the vehicle detected by the lateral G sensor, and a change amount of the lateral G of the vehicle detected by the lateral G sensor.

### Summary of the Invention

### Technical Problem

In the case where the rider is severely injured, it is extremely important to treat the injured rider as soon as possible to save the rider's life. However, such a problem arises that, even when the message requesting the rescue is sent to the outside, it takes extremely long time for a rescuer to arrive at the site of the accident in the rugged mountain terrain. Such a problem also arises that, even when the rescuer, such as a rescue team member who has received the message requesting the rescue, is headed for a rescue effort, it is difficult for the rescuer to find the injured rider at midnight or in bad weather and thus takes long time to find the injured rider. Therefore, the injured is preferably rescued by the other rider who passes nearby the site of the accident in terms of the prompt rescue of the injured.

However, even when the other rider passes nearby the site of the accident, he or she may not notice an accident vehicle or the injured at midnight or in the bad weather and may pass the site. In particular, in the case where the injured and the vehicle are located away from a road that the other rider runs, such as a case where the injured and the vehicle fall over a cliff by the accident, it is difficult for the other rider to find the injured and the vehicle. If the injured loses consciousness in such a case, he or she cannot voice for the rescue.

Meanwhile, in the above related art, the message is automatically sent when the accident occurs. Thus, even when the rescuer, such as the other rider, is nearby, the message is sent to request the rescue. Therefore, an unnecessary request of the rescue is possibly made when the other rider is available for the rescue.

The invention has been made in view of the above problems, and one of purposes thereof is to provide an automatic alerting device and an automatic alerting method capable of alerting a person who is nearby a site of a vehicle accident to the accident when the vehicle accident occurs.

The other purpose of the invention is to provide an automatic alerting device and an automatic alerting method that detect occurrence of a vehicle accident and alert about the occurrence of the accident when a rescuer is not present nearby.

### Solution to Problem

The invention is defined in the claims. Preferred embodiments are set out in the dependent claims.

### Brief Description of Drawings

Fig. 1 is a functional block diagram of an automatic alerting device according to an embodiment of the invention.
Fig. 2 is a control flowchart of an automatic alerting method according to the embodiment of the invention.

### Description of Embodiment

A description will hereinafter be made on an embodiment of the invention with reference to the drawings. An automatic alerting device according to the embodiment of the invention is provided in vehicles such as a two-wheeled vehicle and a four-wheeled vehicle. In this embodiment, a description will be made on an example in which the automatic alerting device is provided in the two-wheeled vehicle. However, the invention is not limited thereto.

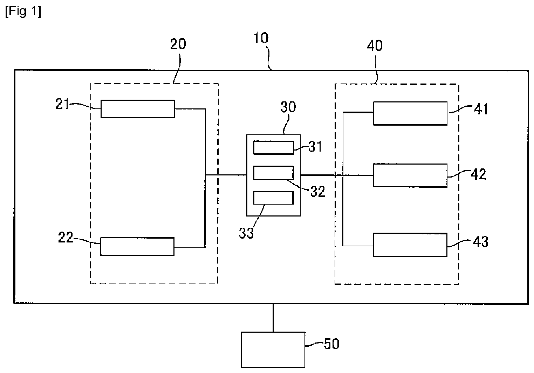

Fig. 1 is a functional block diagram of the automatic alerting device according to the embodiment of the invention. As depicted in Fig. 1, an automatic alerting device 10 according to the embodiment of the invention has: a state detection section 20 that detects a state of the vehicle; an electronic control unit (ECU) 30 that is configured to be able to receive a signal (information) from the state detection section 20; and an alerting section 40 that alerts the outside to a fact that the two-wheeled vehicle is involved in an accident. The automatic alerting device 10 is electrically connected to a battery 50 of the vehicle and is driven by electricity that is supplied from the battery 50.

The state detection section 20 has: a wheel speed sensor 21 that is configured to be able to detect a wheel speed of the two-wheeled vehicle; and a lateral G sensor 22 that is configured to be able to detect a value of lateral G of the two-wheeled vehicle. Note that the "lateral G" herein means gravity acceleration that is applied to a vehicle body of the two-wheeled vehicle in a lateral direction (laterally).

The wheel speed sensor 21 sends a value of the detected wheel speed of the two-wheeled vehicle to the ECU 30. The lateral G sensor 22 sends a value of the detected lateral G of the two-wheeled vehicle to the ECU 30.

The ECU 30 has: an accident determination section 31 that determines whether the two-wheeled vehicle is involved in the accident on the basis of the state of the two-wheeled vehicle that is detected by the state detection section 20; a control section 32 that is configured to control the alerting section 40; and a rescue determination section 33 that determines whether the two-wheeled vehicle has been rescued.

The accident determination section 31 can determine whether the two-wheeled vehicle at least travels on the basis of the value of the wheel speed that is received from the wheel speed sensor 21. That is, the accident determination section 31 can recognize that the two-wheeled vehicle is in an almost stopped state when the value of the wheel speed that is received from the wheel speed sensor 21 is at most equal to a specified value.

The accident determination section 31 is configured to compute an absolute value of the lateral G and a change amount of the lateral G on the basis of the value of the lateral G that is received from the lateral G sensor 22. The accident determination section 31 can determine whether the vehicle body of the two-wheeled vehicle is at least in a fallen state on the basis of the computed absolute value of the lateral G. That is, the accident determination section 31 can recognize that the vehicle body of the two-wheeled vehicle is in the fallen state at a specified angle or larger when the absolute value of the lateral G is at least equal to a specified value. In addition, the accident determination section 31 can also determine whether the two-wheeled vehicle is at least in a stopped state in the lateral direction on the basis of the computed change amount of the lateral G. That is, the accident determination section 31 can recognize that the two-wheeled vehicle is in the almost stopped state in the lateral direction when the computed change amount of the lateral G is at most equal to a specified value.

In the cases where the wheels of the two-wheeled vehicle are each in an almost stopped state, where the vehicle body of the two-wheeled vehicle is in the fallen state at the specified angle or larger, and where the almost stopped state in the lateral direction continues for a specified duration or longer, there are high possibilities of a state where the two-wheeled vehicle is involved in the accident and a state where the two-wheeled vehicle has not been rescued (no one has attempted to stand the two-wheeled vehicle up) . Accordingly, based on the value of the wheel speed received from the wheel speed sensor 21 and the lateral G received from the lateral G sensor 22, the accident determination section 31 can indirectly determine states where the two-wheeled vehicle is involved in the accident, where the rider himself/herself cannot stand the two-wheeled vehicle up, and where no rescuer is present nearby.

The rescue determination section 33 is configured to compute the change amount of the lateral G on the basis of the value of the lateral G of the two-wheeled vehicle that is detected by the lateral G sensor 22. The rescue determination section 33 determines whether the two-wheeled vehicle has been rescued on the basis of the computed change amount of the lateral G. More specifically, the rescue determination section 33 can determine that the two-wheeled vehicle is in a moved state (a rescued state) when the change amount of the lateral G is at least equal to the specified value. A fact that the two-wheeled vehicle has been rescued means a case where the rider only suffers from a minor injury or a case where the rescuer has appeared. Accordingly, by determining whether the two-wheeled vehicle has been rescued, the rescue determination section 33 can indirectly determine a state where the rider is safe or a state where the rescuer has appeared.

The control section 32 is configured to make the alerting section 40 alert when the accident determination section 31 determines that the two-wheeled vehicle is involved in the accident. In addition, the control section 32 is configured to stop an alert by the alerting section 40 when the rescue determination section 33 determines that the vehicle has been rescued.

The alerting section 40 has: a communication section 41 that has a global positioning system (GPS) and the like and is configured to be able to send a signal requesting rescue to a rescue institution, such as a rescue team, a fire department, and a police department; an alarm 42 (a sound generator) that generates sound; and a hazard-warning lamp 43 (a light emitter) that emits light.

The communication section 41 receives a command from the control section 32 and can thereby send, for example, the signal requesting the rescue and position information of the two-wheeled vehicle to the rescue institution via a communication satellite, for example. In addition, the communication section 41 receives the command from the control section 32 and can thereby send a signal to cancel the signal requesting the rescue, which has been sent to the rescue institution, to the rescue institution.

The alarm 42 receives a command from the control section 32 and can thereby sounds an alarm to the outside (around) the two-wheeled vehicle. Note that a horn (a klaxon) that is mounted in the two-wheeled vehicle in advance can be used as the alarm 42.

The hazard-warning lamp 43 receives a command from the control section 32 and can thereby emit the light to the outside (around) the two-wheeled vehicle. Note that a hazard-warning lamp that is mounted in the two-wheeled vehicle in advance can be used as the hazard-warning lamp 43.

Note that the description has been made on the state detection section 20 that has the wheel speed sensor 21 and the lateral G sensor 22 in this embodiment. However, the invention is not limited thereto. Another sensor that can detect the vehicle accident may be provided as the state detection section 20. For example, in the case where the vehicle is the four-wheeled vehicle, a sensor that detects activation of an airbag can be provided. In this way, an accident of the four-wheel vehicle can indirectly be detected.

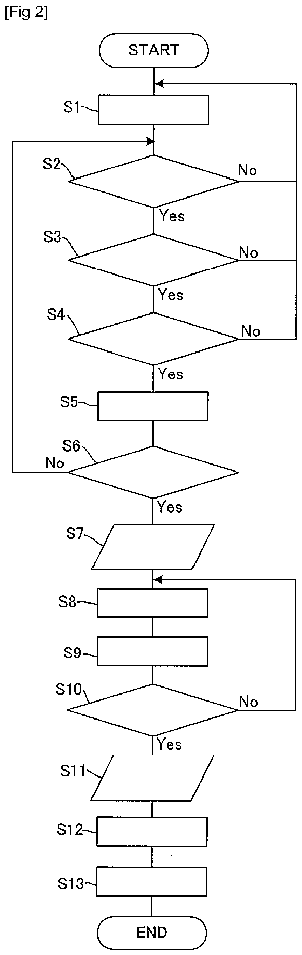

Next, a description will be made on an automatic alerting method of the invention. Fig. 2 is a control flowchart of the automatic alerting method according to this embodiment. Initially, an ignition of the vehicle is turned on, and the electricity is supplied from the battery 50 to the automatic alerting device 10. The automatic alerting device 10 that executes the automatic alerting method of the invention is thereby activated, and a timer in the ECU 30 is reset to 0 (S1).

Once the automatic alerting device 10 is activated, the wheel speed sensor 21 detects the wheel speed of the two-wheeled vehicle and sends the value of the detected wheel speed to the ECU 30. Similarly, the lateral G sensor 22 detects the lateral G of the two-wheeled vehicle and sends the value of the detected lateral G to the ECU 30. The accident determination section 31 in the ECU 30 computes the absolute value and the change amount of the lateral G from the received value of the lateral G.

The accident determination section 31 in the ECU 30 determines whether the value of the wheel speed is at most equal to a specified speed, for example, at most equal to 4.0 km/h (S2). Note that an arbitrary value is stored as this specified speed in a memory of the ECU 30 in advance. If the accident determination section 31 determines that the value of the wheel speed is not at most equal to the specified speed (S2, No), the timer in the ECU 30 is reset to 0 again (S1).

If the accident determination section 31 determines that the value of the wheel speed is at most equal to the specified speed (S2, Yes), the accident determination section 31 next determines whether the absolute value of the lateral G is at least equal to the specified value, for example, at least equal to 0.6 Gal (S3). Note that an arbitrary value is stored as this specified value in the memory of the ECU 30 in advance. If the accident determination section 31 determines that the absolute value of the lateral G is not at least equal to the specified value (S3, No), the timer in the ECU 30 is reset to 0 (S1).

If the accident determination section 31 determines that the absolute value of the lateral G is at least equal to the specified value (S3, Yes), the accident determination section 31 next determines whether the change amount of the lateral G is at least equal to the specified value, for example, at least equal to 2.0 m/s² (S4). Note that an arbitrary value is stored as this specified value in the memory of the ECU 30 in advance. If the accident determination section 31 determines that the change amount of the lateral G is not at least equal to the specified value (S4, No), the timer in the ECU 30 is reset to 0 (S1).

If the accident determination section 31 determines that the change amount of the lateral G is at least equal to the specified value (S4, Yes), the ECU 30 adds 1 to the timer (S5) . Note that above-described step 2 to step 4 are repeatedly executed at specified time intervals, for example, at every 20 msecs. An execution interval of step S2 to step S4 can appropriately be set.

The accident determination section 31 determines whether a count value of the timer exceeds a specified value, for example, 90 (S6). Note that an arbitrary value is stored as this specified value in the memory of the ECU 30 in advance. The number of the count is added at specified time intervals (for example, at every 20 msecs). Thus, the count value of the timer represents time from occurrence of the accident.

If the accident determination section 31 determines that the count value of the timer does not exceed the specified value (S6, No), the process returns to step S2, and step S2 to step S5 are repeatedly executed. If the accident determination section 31 determines that the count value of the timer exceeds the specified value (S6, Yes), there are high possibilities of the state where the accident has occurred and the state where the two-wheeled vehicle has not been rescued (no one has attempted to stand the two-wheeled vehicle up) for specified time. Accordingly, in this case, the accident determination section 31 determines that the two-wheeled vehicle is in the state of being involved in the accident, and the control section 32 makes the alerting section 40 alert the outside.

More specifically, the control section 32 makes the communication section 41 send the signal requesting the rescue to the rescue institution via the GPS and the like (S7). In this way, the rescue can automatically be requested to the rescue institution. In addition, the control section 32 turns on the hazard-warning lamp 43 (S8) and makes the alarm 42 sound the intermittent alarm (S9) . By sounding the alarm, the nearby rescuer (another rider or the like) can be alerted to the occurrence of the accident. Furthermore, by turning on the hazard-warning lamp 43, the rescuer who has come near a site can be alerted to position of the two-wheeled vehicle.

Next, the rescue determination section 33 in the ECU 30 receives the value of the lateral G of the two-wheeled vehicle from the lateral G sensor 22. The rescue determination section 33 computes the change amount of the lateral G from the received value of the lateral G and determines whether this change amount is at least equal to the specified value, for example, at least equal to 2.0 m/s² (S10) . If the rescue determination section 33 determines that the change amount of the lateral G is not at least equal to the specified value (S10, No), the process returns to step S8, and lighting of the hazard-warning lamp 43 and sounding of the alarm (S9) are continued.

If the rescue determination section 33 determines that the change amount of the lateral G is at least equal to the specified value (S10, Yes), in other words, if the rescue determination section 33 determines that the vehicle has been rescued, the control section 32 makes the alerting section 40 stop the alert.

More specifically, the control section 32 makes the communication section 41 send the signal to cancel the signal requesting the rescue to the rescue institution via the GPS and the like (S11). In addition, the control section 32 turns off the hazard-warning lamp 43 (S12) and makes the alarm 42 stop sounding the alarm (S13). In this way, an unnecessary rescue request can be prevented. In addition, after the vehicle is rescued, lighting of the hazard-warning lamp 43 and sounding of the alarm of the alarm 42 can automatically be stopped.

As it has been described so far, in the automatic alerting device 10 and the automatic alerting method of this embodiment, the alarm 42 sounds the alarm when the accident determination section 31 determines that the vehicle is involved in the accident. Thus, when the accident occurs, the other rider or the rescuer near the site of the accident can be alerted to the occurrence of the accident. In addition, because the hazard-warning lamp 43 is turned on, the other rider or the rescuer can be alerted to the position of the vehicle even in an environment with poor visibility. Thus, finding of the accident vehicle can be facilitated.

The state detection section 20 has the wheel speed sensor 21 and the lateral G sensor 22. The accident determination section 31 determines whether the vehicle is involved in the accident on the basis of the wheel speed, the absolute value of the lateral G, and the change amount of the lateral G. In this way, the states where the rider himself/herself cannot stand the two-wheeled vehicle up and where no rescuer is present nearby can indirectly be determined. On the contrary, when the rescuer such as the other rider or the like is present near the site, the alert to the outside is not made. Thus, the unnecessary rescue request can be prevented.

The accident determination section 31 determines that the vehicle is involved in the accident when a state where the wheel speed is at most equal to the specified value, the absolute value of the lateral G is at least equal to the specified value, and the change amount of the lateral G is at most equal to the specified value at least continues for the specified time. In this way, the occurrence of the accident can reliably be detected, and erroneous detection of the occurrence of the accident can be prevented.

When the accident determination section 31 determines that the vehicle is involved in the accident, the communication section 41 sends the signal requesting the rescue to the outside. In this way, the rescue request can be made to the rescue institution.

When the rescue determination section 33 determines that the vehicle has been rescued, the alert by the alerting section 40 is stopped. In this way, the unnecessary rescue request can be prevented. Furthermore, the rescue determination section 33 determines that the vehicle has been rescued when it is determined that the change amount of the lateral G of the vehicle is at least equal to the specified value. Accordingly, the rescue determination section 33 can indirectly determine that a rider is in such a condition that he or she can move the vehicle or that the rescuer is present. Thus, the alert by the alerting section 40 can be stopped only when safety of the rider can be confirmed or only when the rescuer is present.

In this embodiment that has been described so far, when the accident determination section 31 determines the state where the two-wheeled vehicle is involved in the accident, the communication section 41, the alarm 42, and the hazard-warning lamp 43 each make the alert. However, the invention is not limited thereto. The alert may be made to the outside by using at least one of the communication section 41, the alarm 42, and the hazard-warning lamp 43.

Note that, in this embodiment, the accident determination section 31 is configured to compute the absolute value and the change amount of the lateral G on the basis of the value of the lateral G that is detected by the lateral G sensor 22. However, the invention is not limited thereto. The vehicle only needs to have a configuration capable of detecting the absolute value and the change amount of the lateral G. For example, instead of the lateral G sensor 22, a sensor that is configured to detect the value of the lateral G and compute the absolute value thereof or a sensor that is configured to detect the value of the lateral G and compute the change amount thereof may be adopted.

Note that, as an additional function of the automatic alerting device 10 according to this embodiment, the communication section 41 can be used to track a stolen vehicle on the basis of the position information of the GPS when the vehicle is stolen, for example. In addition, as another additional function of the automatic alerting device 10 according to this embodiment, the lateral G sensor 22 can be used to have a configuration to cancel a signal light of the vehicle at a time when the lateral G that is at least equal to a specified value is detected.

The description has been made so far on the embodiment of the invention. The above-described embodiment of the invention is merely used to facilitate understanding of the invention and thus has no intention of limiting the invention.

## Claims

1. An automatic alerting device that automatically alerts about occurrence of an accident of a vehicle, the automatic alerting device comprising:
a wheel speed sensor that detects the wheel speed of the vehicle;
a lateral G sensor that detects lateral G of the vehicle;
an alerting section that alerts outside of the vehicle;
a control section that controls the alerting section; and
an accident determination section that determines whether the vehicle is involved in the accident on the basis of the wheel speed detected by the wheel speed sensor, an absolute value of the lateral G of the vehicle detected by the lateral G sensor, and a change amount of the lateral G of the vehicle detected by the lateral G sensor,
wherein
the control section makes the alerting section alert the outside when the accident determination section determines that the vehicle is involved in the accident,
wherein
the automatic alerting device further comprises a rescue determination section that determines whether the vehicle has been rescued after occurrence of the accident of the vehicle, wherein
the rescue determination section determines whether the vehicle has been rescued on the basis of the change amount of the lateral G of the vehicle that is detected by the lateral G sensor, and
when the rescue determination section determines that the vehicle has been rescued, the control section stops an alert by the alerting section.

2. The automatic alerting device according to claim 1, wherein
the rescue determination section determines whether the change amount of the lateral G of the vehicle is at least equal to a specified value, and determines that the vehicle has been rescued when determining that the change amount of the lateral G of the vehicle is at least equal to the specified value.

3. The automatic alerting device according to claim 1 or 2, wherein
the alerting section has a communication section capable of sending a signal to the outside, and
the control section makes the communication section send the signal to the outside when the accident determination section determines that the vehicle is involved in the accident.

4. An automatic alerting method that automatically alerts about occurrence of an accident of a vehicle, the automatic alerting method comprising:
a detection step of detecting a wheel speed of the vehicle, an absolute value of lateral G of the vehicle, and a change amount of the lateral G of the vehicle;
an accident determination step of determining whether the vehicle is involved in the accident on the basis of the wheel speed, the absolute value of the lateral G, and the change amount of the lateral G; and
an alerting step of alerting outside when it is determined in the accident determination step that the vehicle is involved in the accident
wherein
the automatic alerting method further comprises: a rescue determination step of determining whether the vehicle has been rescued on the basis of the change amount of the lateral G of the vehicle; and a step of stopping an alert when it is determined in the rescue determination step that the vehicle has been rescued.

5. The automatic alerting method according to claim 4, wherein
in the rescue determination step, it is determined whether the change amount of the lateral G of the vehicle is at least equal to a specified value, and it is determined that the vehicle has been rescued when it is determined that the change amount of the lateral G of the vehicle is at least equal to the specified value.

6. The automatic alerting method according to claim 4 or 5, wherein
in the alerting step, a signal is sent to the outside so as to alert the outside when it is determined in the accident determination step that the vehicle is involved in the accident.

## Patentansprüche

1. Automatische Alarmvorrichtung, die automatisch über das Auftreten eines Unfalls eines Fahrzeugs alarmiert, wobei die automatische Alarmvorrichtung umfasst:
einen Raddrehzahlsensor, der die Raddrehzahl des Fahrzeugs erfasst;
einen seitlichen Beschleunigungssensor, der die seitliche Beschleunigung des Fahrzeugs erfasst;
eine Alarmeinheit, welche die Außenwelt des Fahrzeugs alarmiert;
einen Steuereinheit, welche die Alarmeinheit steuert; und
eine Unfallermittlungseinheit, die aufgrund der Raddrehzahl, die von dem Raddrehzahlsensor erfasst wird, eines Absolutwerts der seitlichen Beschleunigung des Fahrzeugs, der durch den seitlichen Beschleunigungssensor erfasst wird, und einer Änderungsgröße der seitlichen Beschleunigung des Fahrzeugs, die durch den seitlichen Beschleunigungssensor erfasst wird, ermittelt, ob das Fahrzeug in den Unfall verwickelt ist,
wobei die Steuereinheit die Alarmeinheit veranlasst, die Außenwelt des Fahrzeugs zu alarmieren, wenn die Unfallermittlungseinheit ermittelt, dass das Fahrzeug in den Unfall verwickelt ist,
wobei die automatische Alarmvorrichtung außerdem eine Rettungsermittlungseinheit umfasst, die ermittelt, ob das Fahrzeug nach dem Auftreten des Unfalls des Fahrzeugs gerettet wurde,
wobei die Rettungsermittlungseinheit ermittelt, ob das Fahrzeug aufgrund der Änderungsgröße der seitlichen Beschleunigung des Fahrzeugs, die durch den seitlichen Beschleunigungssensor erfasst wird, gerettet wurde, und
wobei, wenn die Rettungsermittlungseinheit ermittelt, dass das Fahrzeug gerettet wurde, die Steuereinheit einen durch die Alarmeinheit ausgelösten Alarm stoppt.

2. Automatische Alarmvorrichtung nach Anspruch 1, wobei die Rettungsermittlungseinheit ermittelt, ob die Änderungsgröße der seitlichen Beschleunigung des Fahrzeugs mindestens gleich einem festgelegten Wert ist, und ermittelt, dass das Fahrzeug gerettet wurde, wenn ermittelt wird, dass die Änderungsgröße der seitlichen Beschleunigung des Fahrzeugs mindestens gleich dem festgelegten Wert ist.

3. Automatische Alarmvorrichtung nach Anspruch 1 oder 2,
wobei die Alarmeinheit eine Kommunikationseinheit aufweist, die in der Lage ist, ein Signal an die Außenwelt zu senden, und
wobei die Steuereinheit die Kommunikationseinheit veranlasst, das Signal an die Außenwelt des Fahrzeugs zu senden, wenn die Unfallermittlungseinheit ermittelt, dass das Fahrzeug in den Unfall verwickelt ist.

4. Automatisches Alarmverfahren, das automatisch über das Auftreten eines Unfalls eines Fahrzeugs alarmiert, wobei das automatische Alarmverfahren umfasst:
einen Erfassungsschritt zum Erfassen einer Raddrehzahl des Fahrzeugs, eines Absolutwerts einer seitlichen Beschleunigung des Fahrzeugs und einer Änderungsgröße der seitlichen Beschleunigung des Fahrzeugs;
einen Unfallermittlungsschritt zum Ermitteln aufgrund der Raddrehzahl, des Absolutwerts der seitlichen Beschleunigung und der Änderungsgröße der seitlichen Beschleunigung, ob das Fahrzeug in den Unfall verwickelt ist; und
einen Alarmierungsschritt zum Alarmieren der Außenwelt, wenn in dem Unfallermittlungsschritt ermittelt wird, dass das Fahrzeug in den Unfall verwickelt ist;
wobei das automatische Alarmverfahren außerdem umfasst:
einen Rettungsermittlungsschritt zum Ermitteln, ob das Fahrzeug aufgrund der Änderungsgröße der seitlichen Beschleunigung des Fahrzeugs gerettet wurde; und
einen Schritt zum Stoppen eines Alarms, wenn in dem Rettungsermittlungsschritt ermittelt wird, dass das Fahrzeug gerettet wurde.

5. Automatisches Alarmverfahren nach Anspruch 4,
wobei in dem Rettungsermittlungsschritt ermittelt wird, ob die Änderungsgröße der seitlichen Beschleunigung des Fahrzeugs mindestens gleich einem festgelegten Wert ist, und ermittelt wird, dass das Fahrzeug gerettet wurde, wenn ermittelt wird, dass die Änderungsgröße der seitlichen Beschleunigung des Fahrzeugs mindestens gleich dem festgelegten Wert ist.

6. Automatisches Alarmverfahren nach Anspruch 4 oder 5,
wobei in dem Alarmierungsschritt ein Signal an die Außenwelt gesendet wird, um die Außenwelt zu alarmieren, wenn in dem Unfallermittlungsschritt ermittelt wird, dass das Fahrzeug in den Unfall verwickelt ist.

## Revendications

1. Dispositif d'alerte automatique qui alerte automatiquement concernant la survenue d'un accident à un véhicule, le dispositif d'alerte automatique comportant :
un capteur de vitesse de roue qui détecte la vitesse de roue du véhicule ;
un capteur de G latéral qui détecte un G latéral du véhicule ;
une section d'alerte qui donne l'alerte à l'extérieur du véhicule ;
une section de commande qui commande la section d'alerte ; et
une section de détermination d'accident qui détermine si le véhicule est impliqué dans l'accident d'après la vitesse de roue détectée par le capteur de vitesse de roue, une valeur absolue du G latéral du véhicule détecté par le capteur de G latéral, et une quantité de variation du G latéral du véhicule détectée par le capteur de G latéral,
la section de commande amenant la section d'alerte à donner l'alerte à l'extérieur lorsque la section de détermination d'accident détermine que le véhicule est impliqué dans l'accident,
le dispositif d'alerte automatique comportant en outre une section de détermination de secours qui détermine si le véhicule a été secouru après la survenue de l'accident au véhicule,
la section de détermination de secours déterminant si le véhicule a été secouru d'après la quantité de variation du G latéral du véhicule qui est détectée par le capteur de G latéral, et
la section de commande arrêtant une alerte par la section d'alerte lorsque la section de détermination de secours détermine que le véhicule a été secouru.

2. Dispositif d'alerte automatique selon la revendication 1,
la section de détermination de secours déterminant si la quantité de variation du G latéral du véhicule est au moins égale à une valeur spécifiée, et déterminant que le véhicule a été secouru lorsqu'il est déterminé que la quantité de variation du G latéral du véhicule est au moins égale à la valeur spécifiée.

3. Dispositif d'alerte automatique selon la revendication 1 ou 2,
la section d'alerte comprenant une section de communication capable d'émettre un signal vers l'extérieur, et
la section de commande amenant la section de communication à émettre le signal vers l'extérieur lorsque la section de détermination d'accident détermine que le véhicule est impliqué dans l'accident.

4. Procédé d'alerte automatique qui alerte automatiquement concernant la survenue d'un accident d'un véhicule, le procédé d'alerte automatique comportant :
une étape de détection consistant à détecter une vitesse de roue du véhicule, une valeur absolue de G latéral du véhicule, et une quantité de variation du G latéral du véhicule ;
une étape de détermination d'accident consistant à déterminer si le véhicule est impliqué dans l'accident d'après la vitesse de roue, la valeur absolue du G latéral, et la quantité de variation du G latéral ; et une étape d'alerte consistant à donner l'alerte à l'extérieur lorsqu'il est déterminé, dans l'étape de détermination d'accident, que le véhicule est impliqué dans l'accident,
le procédé d'alerte automatique comportant en outre :
une étape de détermination de secours consistant à déterminer si le véhicule a été secouru d'après la quantité de variation du G latéral du véhicule ; et une étape consistant à arrêter une alerte lorsqu'il est déterminé, dans l'étape de détermination de secours, que le véhicule a été secouru.

5. Procédé d'alerte automatique selon la revendication 4, **caractérisé par** les étapes consistant à
déterminer, dans l'étape de détermination de secours, si la quantité de variation du G latéral du véhicule est au moins égale à une valeur spécifiée, et déterminer que le véhicule a été secouru lorsqu'il est déterminé que la quantité de variation du G latéral du véhicule est au moins égale à la valeur spécifiée.

6. Procédé d'alerte automatique selon la revendication 4 ou 5,
un signal étant émis vers l'extérieur, dans l'étape d'alerte, de façon à donner l'alerte à l'extérieur lorsqu'il est déterminé, dans l'étape de détermination d'accident, que le véhicule est impliqué dans l'accident.
